# EUROPEAN PATENT APPLICATION

(11) **EP 1 435 341 A1**
(43) Date of publication of application: **07.07.2004**
(21) Application number: 02800229.3
(22) Date of filing: 10.09.2002
(51) Int. Cl.: C03B 23/203

(54) **METHOD AND DEVICE FOR JOINING BAND-SHAPED GLASS PANES, METHOD AND DEVICE FOR MANUFACTURING GLASS FRAME, AND METHOD AND DEVICE FOR MANUFACTURING IMAGE DISPLAY DEVICE WITH GLASS FRAME**

(30) Priority: 11.09.2001 JP 2001275519
(71) Applicant: Kabushiki Kaisha Toshiba, Tokyo 105-8001 (JP)
(72) Inventor: HIROTA, Koji A-303, Toshiba-Kazoku-Apart, Fukaya-shi, Saitama 366-0034 (JP); SEINO, Kazuyuki, Fukaya-shi, Saitama 366-0034 (JP); NISHIMURA, Takashi, Fukaya-shi, Saitama 366-0801 (JP)
(74) Representative: HOFFMANN EITLE
(86) International application number: PCT/JP2002/009234
(87) International publication number: WO 2003/029157

(57) **Abstract**

In joining the end portions of belt-shaped glass sheets, the end portions of belt-shaped glass sheets are thermally softened after the end portions are located so that they overlap each other within the range of the glass sheet width. Lap portions of the thermally softened end portions are clamped at least once from both sides in the thickness direction of the belt-shaped glass sheets by means of pressure dies. Thus, the lap portions are joined together to be adjusted to the thickness of the belt-shaped glass sheets.

## Description

### Technical Field

This invention relates to a joining method and a joining apparatus for joining the end portions of belt-shaped glass sheets, a manufacturing method and a manufacturing apparatus for a glass frame, and a manufacturing method and a manufacturing apparatus for an image display apparatus with a glass frame.

### Background Art

Thin glass sheets are used for cover glass, spacers, gap sheets, etc., of various electronic apparatuses. In assembling dual glass products having corner portions, such as pair glass, a rectangular glass frame that is formed of a glass sheet must be provided as a spacer between two opposite thin glass sheets. If these dual glass products are to be kept vacuumtight and airtight, in particular, the frame-shaped spacer requires high flatness, as well as freedom from warp or wrinkles.

If the glass frame is relatively small in size, it may be manufactured by being press-molded directly from molten glass or cut out directly from an oversized thin glass sheet. Technically or in consideration of cost, however, it is hard to manufacture a large-sized spacer by these methods.

Alternatively, the glass frame can be manufactured by bending an elongated thin belt-shaped glass sheet and joining their end portions. With the recent advance and development of the redrawing method (heat drawing method), products of stable high quality have been obtained as elongated thin belt-shaped glass sheets that are used as materials for glass frames.

In manufacturing a glass frame by using these elongated belt-shaped glass sheets, the thin belt-shaped glass sheets may be directly bent at right angles by thermally softening three or four portions with their horizontal surfaces maintained. However, the respective end portions of the thin belt-shaped glass sheets must be fused and joined together at least in one position after the sheets are bent in a plurality of positions. It is very hard, therefore, to make the thickness of the entire glass frame, including the individual bent portions, uniform with high accuracy, thereby obtaining a product with high flatness. Further, the aforesaid method involves so many manufacturing processes that it is difficult to lower the cost by automation.

In an alternative possible method, a plurality of thin belt-shaped glass sheets, cut to a given length, may be arranged in the form of a frame such that their respective end portions are butted against one another in the four corners and thermally softened and fused together. In order to maintain the strength of the resulting joins, in this case, the thin belt-shaped glass sheets to be joined must be fully fused with one another. To attain this, the joins are entirely unified and flattened by being stretched after the glass sheets to be fused are once pushed in to form pools in the joins. However, these operations make the manufacturing processes so complicated that high-quality products cannot be manufactured with ease.

This invention has been made in consideration of these circumstances, and its object is to provide a joining method and a joining apparatus, capable of easily joining belt-shaped glass sheets with high flatness, a manufacturing method and a manufacturing apparatus for a glass frame, and a manufacturing method and a manufacturing apparatus for an image display apparatus with a glass frame.

### Disclosure of Invention

In order to achieve the above object, a joining method for belt-shaped glass sheets according to this invention comprises locating the end portions of the belt-shaped glass sheets so that the end portions overlap each other within the range of the glass sheet width and thermally softening the lapped end portions, and clamping lap portions of the thermally softened end portions at least once from both sides in the thickness direction of the belt-shaped glass sheets, thereby joining the lap portions together to adjust the lap portions to the thickness of the belt-shaped glass sheets.

In order to maintain the general flatness of the joined belt-shaped glass sheets, the belt-shaped glass sheets used should be formed of unbent belt-shaped glass that is manufactured by the redrawing method or belt-shaped cut pieces that are obtained by cutting one and the same oversized thin glass sheet.

Preferably, according to this invention, moreover, the clamping time for each cycle in which the thermally softened end portions are clamped should be set to about 2 seconds or less. If joining and thickness correction cannot be achieved satisfactorily by one cycle of clamping, the end portions of the belt-shaped glass sheets are thermally softened again, and the lap portions are then clamped from both sides in the sheet thickness direction.

A joining apparatus for belt-shaped glass sheets according to this invention comprises a glass sheet holding portion which holds a plurality of belt-shaped glass sheets so that the end portions thereof overlap each other within the range of the glass sheet width, a heating mechanism which thermally softens the end portions of the held belt-shaped glass sheets, and a clamping mechanism which clamps lap portions of the thermally softened end portions from both sides in the thickness direction of the belt-shaped glass sheets, thereby joining the lap portions together to adjust the lap portions to the thickness of the belt-shaped glass sheets.

Further, a manufacturing method for a glass frame according to this invention comprises holding a plurality of belt-shaped glass sheets substantially flush with one another in the form of a frame and locating the end portions of each two adjacent belt-shaped glass sheets so that the end portions overlap each other within the range of the glass sheet width, thermally softening the end portions of the belt-shaped glass sheets, and clamping lap portions of the thermally softened end portions at least once from both sides in the thickness direction of the belt-shaped glass sheets, thereby joining the lap portions together to adjust the lap portions to the thickness of the belt-shaped glass sheets.

Furthermore, a manufacturing apparatus according to this invention, which manufactures a glass frame by joining the end portions of belt-shaped glass sheets, comprises a glass sheet holding portion which holds a plurality of belt-shaped glass sheets so that the end portions thereof overlap each other within the range of the glass sheet width, the belt-shaped glass sheets being arranged substantially flush with one another in the form of a frame, a heating mechanism which thermally softens the end portions of the held belt-shaped glass sheets, and a clamping mechanism which clamps lap portions of the thermally softened end portions from both sides in the thickness direction of the belt-shaped glass sheets, thereby joining the lap portions together to adjust the lap portions to the thickness of the belt-shaped glass sheets.

### Brief Description of Drawings

FIGS. 1A to 1C are plan views individually schematically showing processes of joining belt-shaped glass sheets according to an embodiment of this invention;
FIG. 2 is a perspective view showing a thermal softening process of the joining method and a joining apparatus;
FIG. 3 is a perspective view showing a clamping process of the joining method;
FIGS. 4A to 4C are plan views individually schematically showing processes of joining belt-shaped glass sheets according to another embodiment of this invention;
FIGS. 5A to 5C are plan views individually schematically showing processes of joining belt-shaped glass sheets according to still another embodiment of this invention;
FIGS. 6A to 6C are plan views individually schematically showing processes of joining belt-shaped glass sheets according to another embodiment of this invention;
FIGS. 7A to 7C are plan views individually schematically showing processes of joining belt-shaped glass sheets according to another embodiment of this invention;
FIGS. 8A to 8B are plan views individually schematically showing processes of joining belt-shaped glass sheets according to another embodiment of this invention;
FIG. 9 is a perspective view showing an image display apparatus with a glass frame;
FIG. 10 is a sectional view taken along line X-X of FIG. 9; and
FIG. 11 is a front view showing a glass frame manufacturing apparatus according to an embodiment of this invention.

### Best Mode of Carrying Out the Invention

Embodiments of this invention will now be described with reference to the drawings. Basic processes of a joining method and the fundamental configuration of a joining apparatus according to the present invention will be described first.

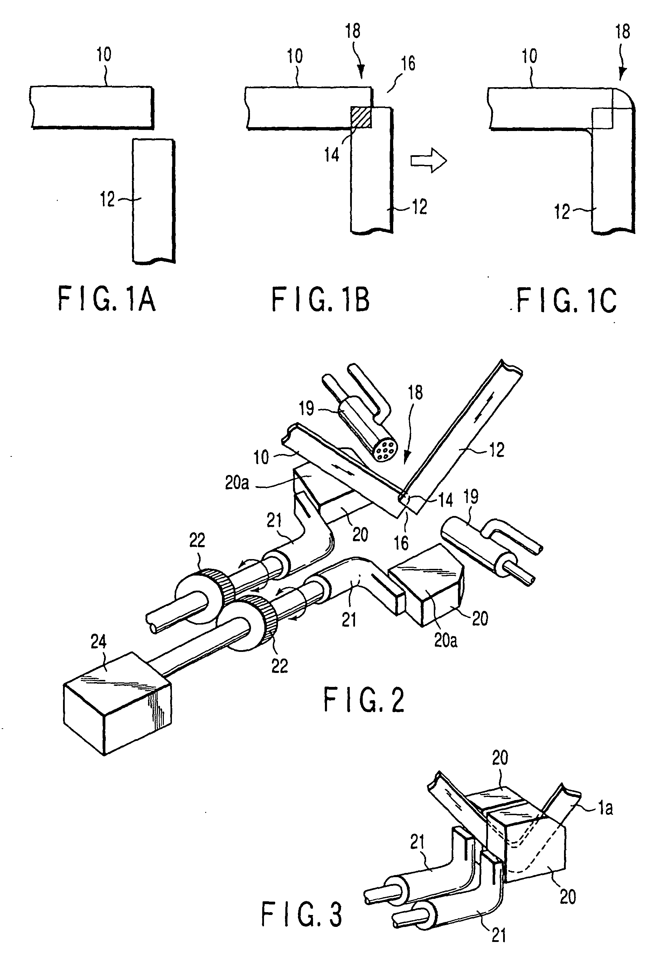

First, as shown in FIGS. 1A and 1B, two belt-shaped glass sheets 10 and 12 are prepared having given cut lengths. Preferably, in order to maintain the general flatness of the joined belt-shaped glass sheets, the belt-shaped glass sheets should be formed of unbent glass that is manufactured by the redrawing method or belt-shaped cut pieces that are obtained by cutting one and the same oversized thin glass sheet. For example, the belt-shaped glass sheets 10 and 12 are formed having the same thickness and the same width. Alternatively, the belt-shaped glass sheets may have different widths.

Subsequently, the two belt-shaped glass sheets 10 and 12 are arranged substantially on the same plane so as to extend across each other or to form a rectangular corner portion 18, for example. As this is done, the respective end portions of the belt-shaped glass sheets are located overlapping each other within the range of the glass sheet width. In this case, the area of lap portions 14 influences the shape of the corner portion that is defined by the two joined belt-shaped glass sheets 10 and 12, especially the their thickness distribution, inside and outside radii of curvature, etc. Preferably, therefore, the area of the lap portions 14 should be within half the glass sheet width. Surplus glass that is produced as the end portions are fused together can be discharged into an outside gap portion 16 that is formed as the superposed end portions are staggered within the range of the glass sheet width.

According to the present joining method, as shown in FIG. 2, the belt-shaped glass sheets 10 and 12 are held upright so that their respective surfaces are situated within a vertical plane and that the interior-angle side of the corner portion 18 faces vertically upward. In this state, the respective end portions of the belt-shaped glass sheets 10 and 12 are thermally softened by means of heating mechanisms, such as burners 19.

The moment the belt-shaped glass sheets 10 and 12 are softened, their respective lap portions 14 are instantaneously clamped at least once between a pair of pressure dies 20 from both sides in the thickness direction of the belt-shaped glass sheets, as shown in FIG. 3. Thereupon, the lap portions 14 are fused and joined together, and the thickness of the resulting joint is made substantially equal to the thickness of the belt-shaped glass sheets. Further, the joint is flattened so that it is substantially flush with the surface of the belt-shaped glass sheets.

The pressure dies 20 are in the form of a rectangular box each and have their respective flat clamping surfaces 20a that engage the respective lap portions 14 of the belt-shaped glass sheets 10 and 12. These pressure dies 20 are fixed to rockable arms 21, individually, and are supported so as to be movable between an open position shown in FIG. 3, in which they are spaced, and a clamping position shown in FIG. 3, in which their respective clamping surfaces 20a face each other with a gap substantially equal to the thickness of the belt-shaped glass sheets between them. Gears 22 are fixed individually on the two arms 21 and are in mesh with each other.

A drive mechanism 24, which includes a motor, a gear mechanism, etc. (not shown), is connected to one of the arms 21. When the one arm 21 is rotated by means of the drive mechanism 24, the two arms 21 rock simultaneously, and the pair of pressure dies 20 are moved between the open position and the clamping position. Thus, the respective lap portions 14 of the belt-shaped glass sheets 10 and 12 can be clamped from both sides by means of the pair of pressure dies 20 as the pressure dies are moved from the open position to the clamping position with the lap portions 14 located between the pressure dies.

Each pressure die 20 is formed of, for example, stainless steel, cast iron, etc., and its surface is coated with a carbon layer or the like to which glass cannot easily adhere.

If the lap portions 14 are instantaneously clamped by means of the pressure dies 20 after the belt-shaped glass sheets are thermally softened, softened surplus glass pools on the interior-angle side of the corner portion 18. Therefore, the curvature shape of the corner portion 18 obtained after joining may possibly undergo dispersion. According to the joining method of the present embodiment, as described above, therefore, the belt-shaped glass sheets 10 and 12 are held upright so that their respective surfaces are situated within a vertical plane and that the interior-angle side of the corner portion 18 faces vertically upward. By thermally softening the lap portions 14 in this state, the softened glass at the interior-angle portion is caused to flow downward by the agency of gravity, and it can move into the gap portion 16. Thus, the glass can be restrained from projecting on the inside of the corner portion 18, so that a joint that has uniform thickness and curvature shape can be obtained.

In order to clamp the glass of the thermally softened lap portions 14 between the pressure dies 20, thereby correcting the thickness and shape of the joint, on the other hand, the viscosity of the glass must be low enough to cause a viscous flow with ease. If the belt-shaped glass sheets have small heat capacity, in particular, the softened glass surface is quickly deprived of heat or cooled to be solidified when it is touched by the metallic pressure dies 20. Accordingly, it is hard to smoothly correct the thickness and flatness of the joint, and cracks are easily caused by thermal shock.

According to the joining method of the present embodiment, therefore, the lap portions 14 are instantaneously clamped by means of the pressure dies 20 to correct the thickness distribution and curvature shape to avoid the surface temperature of the lap portions 14 of the belt-shaped glass sheets that are thermally softened being lowered to the distortion point or below. In this case, the time of contact between the pressure dies 20 and the belt-shaped glass sheets, that is, clamping time, is an essential factor. If this clamping time is long, cracks are easily caused by thermal shock. Therefore, the clamping time for each cycle is adjusted to about 2 seconds or less. If sufficient effects of joining and correction cannot be obtained by one cycle of clamping, the aforesaid thermal softening and instantaneous clamping are repeated again.

Thus, the respective end portions of the belt-shaped glass sheets 10 and 12 can be securely fused and joined together, as shown in FIG. 1C, and the thickness of the joint can be made substantially equal to those of any other parts of the belt-shaped glass sheets so that the whole glass sheets are flat. Thus, a satisfactory quality can be obtained.

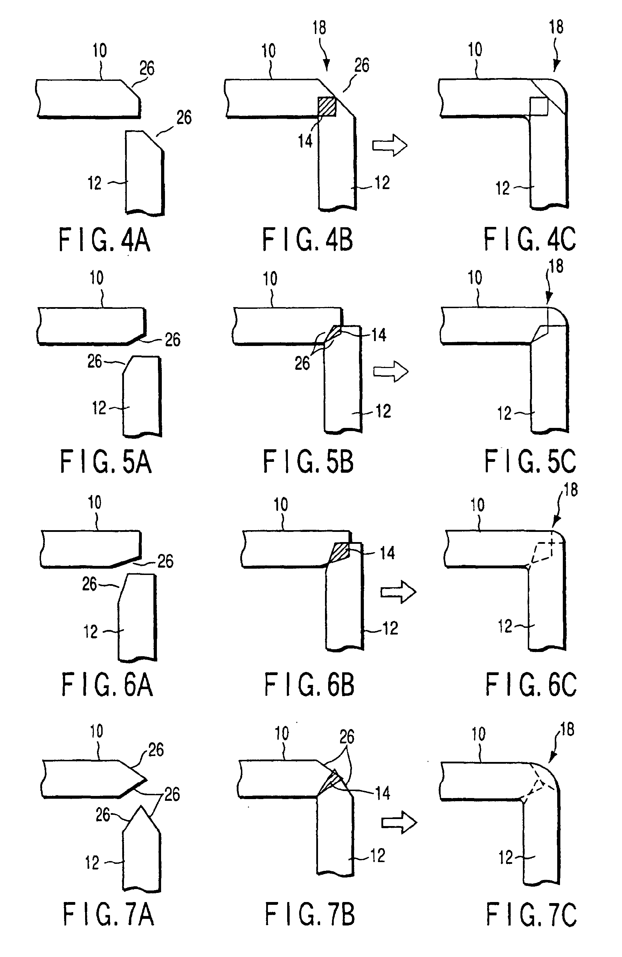

The inside and outside curvature shape of the corner portion 18 of the joint can be freely adjusted by joining the belt-shaped glass sheets 10 and 12 by the aforesaid method. This may be done after the respective end portions of the belt-shaped glass sheets 10 and 12, each of which has a notch 26 formed at least in one end corner, are superposed on each other, as shown in FIGS. 4A to 4C, 5A to 5C, and 6A to 6C. The notch 26 may be formed on either side, outside or inside, of the corner portion 18, and its depth of cut can be also set freely.

Alternatively, the belt-shaped glass sheets 10 and 12 may be joined by the aforesaid method after the respective end portions of the glass sheets 10 and 12, each of which has a notch 26 formed in each end corner, are superposed on each other, as shown in FIGS. 7A to 7C. In this case, the inside and outside curvature shapes of the corner portion 18 of the joint can be also adjusted freely.

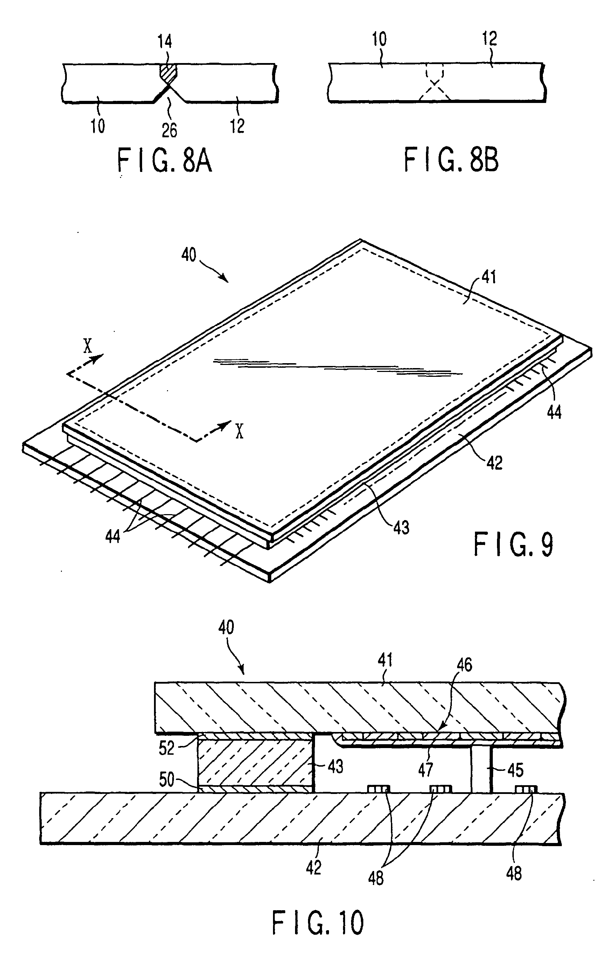

Further, the belt-shaped glass sheets may be joined at any desired angle instead of being joined at right angles to each other as in the foregoing embodiment. As shown in FIGS. 8A and 8B, for example, the belt-shaped glass sheets may be joined so as to be aligned in a straight line.

The following is a detailed description of an embodiment in which the joining method and the joining apparatus described above are applied to a manufacturing method and a manufacturing apparatus for a glass frame that is formed of a plurality of belt-shaped glass sheets.

The manufacturing method and the manufacturing apparatus described herein are used to manufacture a glass frame that serves as a sidewall of an envelope of a field emission display (hereinafter referred to as FED) as an image display device.

An FED having a sidewall formed of a glass frame will be described first.

As shown in FIGS. 9 and 10, the FED is provided with a front substrate 41 and a rear substrate 42, which is formed of a rectangular glass sheet each. These substrates are opposed to each other with a gap of 1 to 2 mm between them. The rear substrate 42 is larger in size than the front substrate 41, and wires 44 for inputting video signals (mentioned later) are drawn out of its outer peripheral portion.

The respective peripheral edge portions of the front substrate 41 and the rear substrate 42 are joined together with a rectangular frame-shaped sidewall 43 of glass between them. Thus, the substrates form a flat, rectangular vacuum envelope 40 that maintains a vacuum inside. The rear substrate 42 and the sidewall 43 are joined together by means of fritted glass 50, while the front substrate 41 and the sidewall 43 are joined together by means of a sealing material 52, such as fritted glass or low-melting metal.

In order to support atmospheric pressure load that acts on the front substrate 41 and the rear substrate 42, a plurality of plate-shaped support members 45 are provided in the vacuum envelope 40. The support members 45 need not always be plate-shape and may alternatively be columnar.

A phosphor screen 46 that functions as an image display surface is formed on the inner surface of the front substrate 41. The phosphor screen 46 is formed by arranging red, green, and blue phosphor layers and black nonreflective layers that are situated between the phosphor layers. A metal back layer 47 of, e.g., aluminum is formed on the phosphor screen 46.

A large number of electron emitting elements 48 that individually emit electron beams are provided on the inner surface of the rear substrate 42. The electron emitting elements 48 serve as sources of electron emission that excite the phosphor layers of the phosphor screen 46. These electron emitting elements 48 are arranged in a plurality of rows and a plurality of columns corresponding to individual pixels.

In the FED constructed in this manner, voltage is applied to the electron emitting elements 48 by means of the wires 44 that are formed on the rear substrate 42, whereupon j electron emitting elements emit electron beams toward the phosphor screen 46. Thus, the phosphor layers of the phosphor screen 46 are excited to glow and display an image.

The following is a description of a manufacturing method and a manufacturing apparatus for the rectangular glass frame that is used for the sidewall of the FED constructed in this manner.

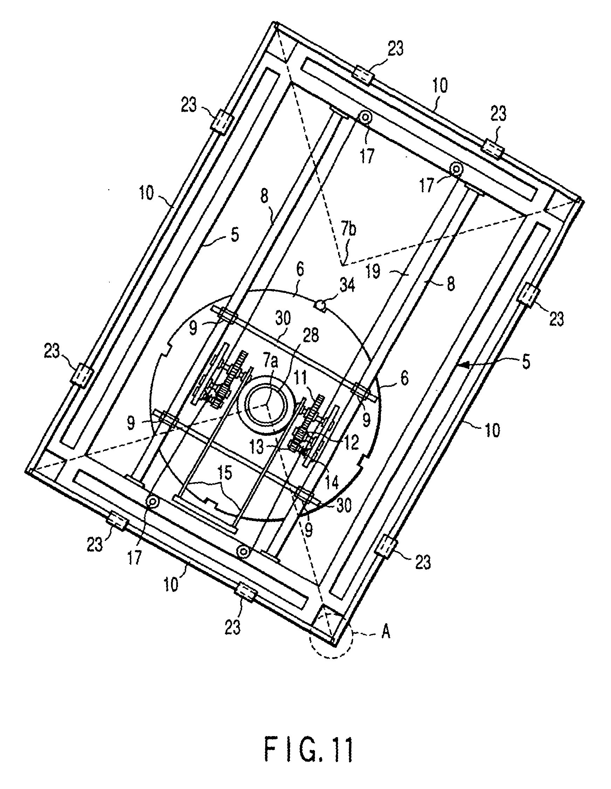

As shown in FIG. 11, this manufacturing apparatus comprises a rocking base 6 and a substantially rectangular rack 5. The base 6 is rockably mounted on a center shaft 28 that extends horizontally. The rack 5 is supported on the rocking base and located within a vertical plane. The rack 5, which functions as a glass sheet holding portion, is assembled from angles of light metal, such as aluminum. Four belt-shaped glass sheets 10, which are cut to accurate lengths that correspond to the long and short sides of the glass frame, are set individually on the side edge portions of the rack 5 by means of magnetized metal retainers 23 so as to form a rectangular frame. As this is done, each belt-shaped glass sheet 10 is set so that its end portion is superposed on an end portion of its adjacent belt-shaped glass sheet at right angles thereto, as shown in FIG. 1B.

A pair of burners 19, a pair of pressure dies 20, and the drive mechanism 24, which are shown in FIGS. 2 and 3, are located in a joining position A indicated by symbol A in FIG. 11, and along with the rack 5, constitute the manufacturing apparatus.

In manufacturing the rectangular glass frame by joining the respective lap portions of the belt-shaped glass sheets 10 that are set on the rack 5 in the aforesaid manner, it is efficient and advantageous to automation to join the four corner joins in the one joining position A. In the case of a square glass frame, the rack 5 on which the belt-shaped glass sheets are set is rotated around its center of rotation or the intersection of diagonal lines. By doing this, the individual corner portions of the glass frame can be successively moved to the one joining position A as they are joined together.

In the case of an oblong glass frame, its two sets of corner portions require different centers 7a and 7b of rotation. In working the frame in the one joining position A, therefore, the rack 5 on which the belt-shaped glass sheets are set is moved parallel to the rotating base 6, whereby the position of the center of rotation relative to the two sets of corner portions is changed.

Thereupon, the rack 5 is provided with two supporting rods 8 that extend parallel to its long sides. These supporting rods are slidably supported on a pair of supporting frames 30, which are fixed to the rocking base 6, by means of four bearings 9. Thus, the rack 5 is supported for translation parallel to its long sides. The supporting rods 8 and the supporting frames 30 constitute a sliding mechanism.

For one set of corner portions, therefore, the rotating base 6 is rotated for 90° to joint the corner portions. For the other set of corner portions, the rack 5 is translated to adjust the position of the center of rotation of the rack 5 to 7a or 7b, and the rocking base 6 is rotated to joint the corner portions thereafter. Thus, all the four corner portions can be joined in the one joining position A.

The shift of the position of the center of rotation of the rack 5, that is, the translation of the rack 5, can be carried out in the following manner. A switching handle 15 on the rack 5 is thrown down on one side to drive gears 11, 12 and 13, and a cable 19 that is stretched via four pulleys 17 on the rack 5 wound up by means of a pulley 14 that is linked to the gear 13.

In manufacturing the glass frame, the position of the rack 5 is first adjusted so that the center 7a of rotation is aligned with the center shaft 28 of the rocking base 6, as shown in FIG. 11. Thereafter, the rocking base 6 is rocked so that the corner portions to be joined are located in the joining position A. Then, a stopper 34 is inserted into one of recesses that are formed in the peripheral edge of the rocking base 6 at intervals of 90° , whereby the rocking base and the rack 5 are fixed.

As shown in FIGS. 2 and 3, the joining work in the joining position A is carried out in a manner such that the joins are thermally softened from both sides by means of the burners 19 with the interior-angle side of the corner portions of the joins vertically upward, and the joins are instantaneously clamped by means of the pair of pressure dies 20. If the target joins cannot be formed by one cycle of clamping, the thermal softening operation and instantaneous clamping should only be repeated several times as required.

After joining of one corner portion is finished, the stopper 34 is disengaged to allow the rocking base 6 to rotate 90° , and the other corner portion is set in the joining position A. After the rocking base 6 and the rack 5 are fixed again by means of the stopper 34, joining the other corner portion is executed.

In fusing together the other sets of corner portions that constitute the glass frame, the switching handle 15 is thrown down on other side to translate the rack 5 to a position such that the position of the center 7b of rotation of the rack 5 coincides with the central shaft 28 of the rocking base 6. After the position of the center of rotation is adjusted, the two corner portions are successively joined in the joining position A by the same method as aforesaid. Thereupon, the thin rectangular glass frame is completed.

According to the manufacturing method and manufacturing apparatus for the glass frame constructed in this manner, the respective end portions of the belt-shaped glass sheets can be securely fused and joined together at the corner portions of the glass frame, and the thickness of the joins can be made substantially equal to those of any other parts of the belt-shaped glass sheets so that the whole glass frame is flat. Thus, a perfect horizontal surface can be maintained, and the glass frame can be obtained having uniform thickness and width and accurate dimensions. By manufacturing the envelope of the image display device using the glass as its sidewall, moreover, the resulting image display device has its peripheral portion hermetically sealed and is improved in reliability.

This invention is not limited to the embodiment described above, and various modifications may be effected therein without departing from the scope of the invention. The joining method and the joining apparatus are not limited to the manufacture of glass frames, and are also applicable to the manufacture of various glass products. Further, this invention is not limited to the manufacture of rectangular glass frames, but is also applicable to the manufacture of glass frames of different shapes, such as triangular ones, pentagonal ones, etc.

### Industrial Applicability

According to this invention, as described in detail herein, there may be provided a joining method and a joining apparatus for belt-shaped glass sheets, whereby the belt-shaped glass sheets can be easily joined with high flatness. Further, there may be obtained a manufacturing method and a manufacturing apparatus, whereby a glass frame free from warp or wrinkles and having uniform thickness and width and high flatness can be manufactured, and a manufacturing method and a manufacturing apparatus for an image display device having a glass frame.

## Claims

1. A method for joining end portions of belt-shaped glass sheets, comprising:
thermally softening the end portions of the belt-shaped glass sheets after locating the end portions so that the end portions overlap each other within the range of the glass sheet width; and
clamping lap portions of the thermally softened end portions at least once from both sides in the thickness direction of the belt-shaped glass sheets, thereby joining the lap portions together to adjust the lap portions to the thickness of the belt-shaped glass sheets.

2. A method for joining belt-shaped glass sheets according to claim 1, wherein the thermally softened end portions are clamped at least once for a clamping time of about 2 seconds or less.

3. A method for joining belt-shaped glass sheets according to claim 1, wherein the end portions are superposed on each other so that the belt-shaped glass sheets form corner portions, the belt-shaped glass sheets are then held substantially within a vertical plane with the inside of the corner portions vertically upward, and the end portions are then thermally softened and clamped.

4. A joining method for belt-shaped glass sheets according to claim 3, wherein the end portions of the belt-shaped glass sheets are superposed on each other with end corners of the belt-shaped glass sheets partially notched.

5. A joining apparatus which joins the end portions of belt-shaped glass sheets, comprising:
a glass sheet holding portion which holds a plurality of belt-shaped glass sheets so that the end portions thereof overlap each other within the range of the glass sheet width;
a heating mechanism which thermally softens the end portions of the held belt-shaped glass sheets; and
a clamping mechanism configured to clamp lap portions of the thermally softened end portions from both sides in the thickness direction of the belt-shaped glass sheets, thereby joining the lap portions together to adjust the lap portions to the thickness of the belt-shaped glass sheets.

6. A joining apparatus according to claim 5, wherein the clamping mechanism includes a pair of pressure dies movable between a clamping position, in which the dies face each other across a gap substantially equal to the thickness of the belt-shaped glass sheets, and an open position, in which the dies are spaced, and a drive mechanism which moves the pair of pressure dies from the open position to the clamping position with the lap portions of the belt-shaped glass sheets situated between the pair of pressure dies so that the lap portions are clamped by means of the pressure dies.

7. A joining apparatus according to claim 6, wherein the glass sheet holding portion includes a rack, which holds the belt-shaped glass sheets substantially flush with one another in a manner such that the belt-shaped glass sheets extend across one another and that the end portions are superposed on each other so that the belt-shaped glass sheets form corner portions, and a base which supports the rack so that the belt-shaped glass sheets are situated substantially within a vertical plane with the inside of the corner portions vertically upward and that the lap portions are situated between the pair of pressure dies.

8. A method of manufacturing a glass frame, comprising:
holding a plurality of belt-shaped glass sheets substantially flush with one another in the form of a frame and locating the end portions of each two adjacent belt-shaped glass sheets so that the end portions overlap each other within the range of the glass sheet width;
thermally softening the end portions of the belt-shaped glass sheets; and
clamping lap portions of the thermally softened end portions at least once from both sides in the thickness direction of the belt-shaped glass sheets, thereby joining the lap portions together to adjust the lap portions to the thickness of the belt-shaped glass sheets.

9. A method manufacturing for a glass frame according to claim 8, wherein the thermally softened end portions are clamped at least once for a clamping time of about 2 seconds or less.

10. A method for manufacturing a glass frame according to claim 8, wherein the belt-shaped glass sheets are held substantially within a vertical plane in a manner such that the inside of corner portions defined by the end portions of the belt-shaped glass sheets faces vertically upward, and the end portions are thermally softened and clamped.

11. A manufacturing apparatus which manufactures a glass frame by joining the end portions of belt-shaped glass sheets, comprising:
a glass sheet holding portion which holds a plurality of belt-shaped glass sheets so that the end portions thereof overlap each other within the range of the glass sheet width, the belt-shaped glass sheets being arranged substantially flush with one another in the form of a frame;
a heating mechanism which thermally softens the end portions of the held belt-shaped glass sheets; and
a clamping mechanism which clamps lap portions of the thermally softened end portions from both sides in the thickness direction of the belt-shaped glass sheets, thereby joining the lap portions together to adjust the lap portions to the thickness of the belt-shaped glass sheets.

12. A manufacturing apparatus according to claim 11, wherein the clamping mechanism includes a pair of pressure dies movable between a clamping position, in which the dies face each other across a gap substantially equal to the thickness of the belt-shaped glass sheets, and an open position, in which the dies are spaced, and a drive mechanism which moves the pair of pressure dies from the open position to the clamping position with the lap portions of the belt-shaped glass sheets situated between the pair of pressure dies so that the lap portions are clamped by means of the pressure dies.

13. A manufacturing apparatus according to claim 11, further comprising a base which supports the rack so that the belt-shaped glass sheets are situated substantially within a vertical plane, are rockable around a substantially horizontal axis of rotation, and can move the end portions of the belt-shaped glass sheets to a given joining position, and a sliding mechanism which supports the rack for movement in the longitudinal direction of one of the belt-shaped glass sheets with respect to the base.

14. A method for manufacturing an image display apparatus, which comprises an envelope, having a front substrate and a rear substrate opposed to each other and a sidewall in the form of a rectangular glass frame located between the respective peripheral portions of the front substrate and the rear substrate, and a plurality of elements arranged in the envelope, comprising:
holding a plurality of belt-shaped glass sheets substantially flush with one another in the form of a frame and locating the end portions of each two adjacent belt-shaped glass sheets so that the end portions overlap each other within the range of the glass sheet width;
thermally softening the overlapping end portions of the belt-shaped glass sheets; and
clamping lap portions of the thermally softened end portions at least once from both sides in the thickness direction of the belt-shaped glass sheets, thereby joining the lap portions together to adjust the lap portions to the thickness of the belt-shaped glass sheets and forming the sidewall.

15. A manufacturing apparatus for an image display apparatus, which comprises an envelope, having a front substrate and a rear substrate opposed to each other and a sidewall in the form of a rectangular glass frame located between the respective peripheral portions of the front substrate and the rear substrate, and a plurality of elements arranged in the envelope, comprising:
a glass sheet holding portion which holds a plurality of belt-shaped glass sheets so that the end portions thereof overlap each other within the range of the glass sheet width, the belt-shaped glass sheets being arranged substantially flush with one another in the form of a frame and constituting the glass frame;
a heating mechanism which thermally softens the end portions of the held belt-shaped glass sheets; and
a clamping mechanism which clamps lap portions of the thermally softened end portions from both sides in the thickness direction of the belt-shaped glass sheets, thereby joining the lap portions together to adjust the lap portions to the thickness of the belt-shaped glass sheets.
